(19) **Europäisches Patentamt / European Patent Office / Office européen des brevets**

(11) **EP 1 617 600 B1**

(12) **EUROPEAN PATENT SPECIFICATION**

(45) Date of publication and mention
of the grant of the patent:
**05.03.2008 Bulletin 2008/10**

(51) Int Cl.:
**H04L 12/28** (2006.01)　　　**H04Q 7/36** (2006.01)

(21) Application number: **05015211.5**

(22) Date of filing: **13.07.2005**

(54) **Channel decision system for access point**

System zur Kanalverteilung für Zugangspunkte

Système de sélection de canal pour point d'accès

(84) Designated Contracting States:
**PT SE**

(72) Inventor: **Yamane, Koji**
**Suginami-ku**
**Tokyo (JP)**

(30) Priority: **13.07.2004 JP 2004206141**
**29.03.2005 JP 2005094305**

(74) Representative: **HOFFMANN EITLE**
**Patent- und Rechtsanwälte**
**Arabellastrasse 4**
**81925 München (DE)**

(43) Date of publication of application:
**18.01.2006 Bulletin 2006/03**

(73) Proprietor: **Iwatsu Electric Co., Ltd.**
**Suginami-ku**
**Tokyo (JP)**

(56) References cited:
**EP-A- 1 257 092　　　EP-A- 1 311 087**
**EP-A- 1 347 600　　　US-A- 5 933 420**
**US-B1- 6 418 327**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 1 617 600 B1

**Description**

**Background of the Invention**

Field of the Invention

The present invention relates to a method for deciding a use channel at an access point that is disposed within a wireless LAN system.

Description of the Related Art

Deciding a use channel at a typical access point (e.g., base station) within a wireless LAN system, commercially available at present, is made by a manual operation of setting up the use channel at the access point, employing a personal computer disposed on the network. It is inefficient to manually set up the use channel at each of a plurality of access points. To resolve this disadvantage, there is an automatic setting method, which is not typical. The automatic setting method has a distributed control method and a centralized control method. In the distributed control method, the access point itself surveys the neighbor communication environments, and decides the channel for use at the access point. Also, in the centralized control method, a centralized management apparatus is disposed on the network to collect the information of communication environments from the access points, and assign the channel to each access point (e.g., refer to JP-A-2003-283506).

In this conventional example, a wireless LAN base station installed in each cell of a service area composing a wireless LAN network scans the frequency channels usable with the wireless LAN, counts a beacon signal of the neighboring base station, notifies the number of neighboring base stations, and records the number of neighboring base stations within the network in a network table. Based on the number of neighboring base stations, the base station decides the radio channel, with the base station having a smaller number of neighboring base stations set as a start point for deciding the radio channel, and then the next base station to decide the radio channel is decided. In this way, the method as described in this document includes deciding the channel from the base station having a smaller number of neighbor base stations. However, if the channel is decided in the sequence from the base station under the favorable condition there are fewer neighbor base stations, the base station under the bad condition where there are more neighboring base stations is retrograde in the order of channel decision, and almost impossible to be assigned the channel under the favorable condition where there are fewer neighbor base stations. In respect of all the base stations, it is difficult to think that the satisfactory result is obtained by increasing the number of base stations as much as possible to assure the stable communications.

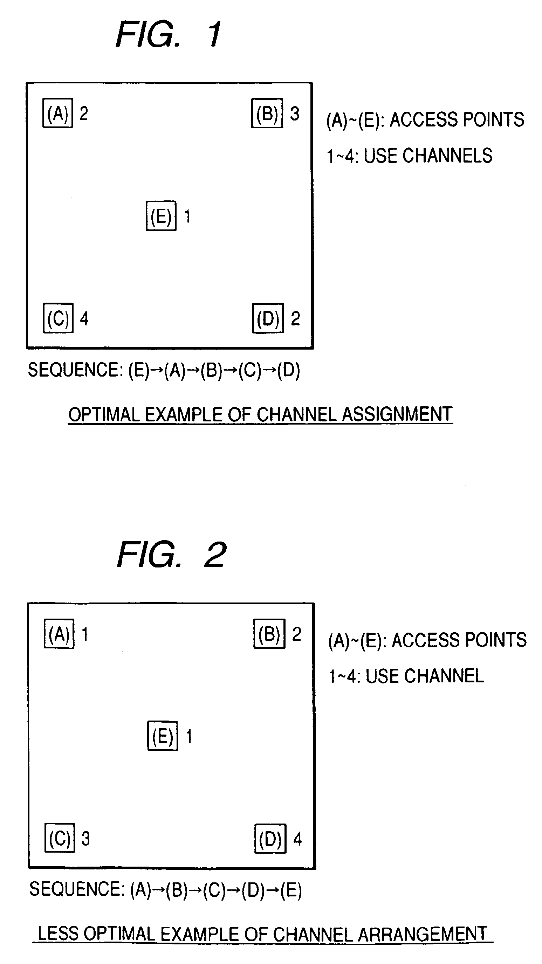

Some measures for resolving the disadvantages of the conventional technique have been examined. Now, it is supposed that there are five access points A, B, C, D and E, and four channels 1, 2, 3 and 4 are available, as shown in Fig. 1. Herein, consider a case where each access point selects the use channel for access point in the sequence of E, A, B, C and D. At first, E selects 1. Then, A selects 2 because 1 is in use. Similarly, B selects 3 and C selects 4. D decides the use of channel 2, knowing that among four channels already in use, 2 is used at the farthest point in terms of the received signal strength by surveying the communication environments.

Next, consider another case where the use channel for access point is selected in the sequence of A, B, C, D and E, as shown in Fig. 2. At first, A selects 1. Then, B selects 2 because 1 is in use. Similarly, C selects 3 and D selects 4. Herein, E selects 1, for example, which has the most favorable communication environments among the channels 1, 2, 3 and 4. However, from Figs. 1 and 2, it is determined that there is a larger distance between access points employing the same channel in an example of Fig. 1, and there is relatively less influence on the intercommunications even employing the same channel.

In this regard, in deciding the channels used at plural access points, the sequence of deciding the channels is important. However, in the distributed control method, the sequence of deciding the channels is indefinite, because each access point makes the channel decision by itself. On the other hand, in the centralized control method, since a centralized management apparatus is employed, the management centralized apparatus can decide the sequence, but is expensive owing to a number of high functional products.

In US-5,933,420 there is disclosed a method and apparatus for assigning the spectrum of a wireless local area network. It includes assigning channels to a set of access points coupled to a network. The network includes a set of wireless network nodes. Each access point communicates, using one of the channels, to a subset of the wireless network nodes. Each channel corresponds to a different frequency range in the electromagnetic spectrum. At least a first access point of the set of access points transmits a plurality of messages. A measure of interference between access points communicating on a first channel is determined from the plurality of messages. A second set of channel assignments, that results in a lower amount of interference between access points communicating on the first channel, is determined. The second set of channel assignments is assigned to the set of access points. Thus non-interfering frequency assignments for the access points can be determined.

## Summary of the Invention

The object of the invention is to provide a channel decision system that allows more efficient assignment of channels than the distributed control method.

Furthermore, the object of the invention is to provide a channel decision system that allows the channel decision inexpensive, employing an existent computer, without needing the centralized management apparatus, unlike the centralized control method.

The invention provides a channel decision system for access points having a plurality of access points outputting a beacon and a management apparatus communicating with the plurality of the access points in a wireless LAN system, characterized in that the management apparatus has: an access point discovering unit adapted to transmit a request to the plurality of access points for the access points to identify themselves, whereby to discover the plurality of access points; an interference amount acquiring unit which transmits a first interference amount measuring request and a second interference amount measuring request to each of the access points, and acquires a first interference amount information and a second interference amount information transmitted from each access point, wherein the first and second interference amount measuring requests make a request to each access point to measure interference amounts; a priority order determining unit which determines priority given to each access point based upon the sum of average signal strengths, calculated based on the first interference amount information, transmitted by each access point; and a channel determining unit which sets a designated channel based on an average signal strength, calculated based on the second interference amount information, for each available channel with respect to each access point selected in accordance with the priority, and determines the designated channel as a use channel of the selected access point to transmit a channel setting request to the selected access point, and in that the access points have: an interference amount measuring unit which measures each signal strength of receivable beacons among beacons transmitted from other access points, in response to said first interference amount measuring request, to acquire said first interference amount, and which measures each signal strength of the receivable beacons among beacons transmitted from the other access points when said second interference amount measuring request is received, with respect to each of available designated channels, to acquire said second interference amount.

In the channel decision system, the management apparatus has a first average signal strength calculating unit which calculates the average signal strength sum based on the first interference amount information transmitted from each access point, and calculates the average signal strength of each channel based on the second interference amount information.

In the channel decision system, the access point has a second average signal strength calculating unit which calculates the average signal strength sum based on the first interference amount information, and calculates the average signal strength of each channel based on the second interference amount information.

In the channel decision system, the priority order determining unit determines the priority given to each access point in increasing order of the average signal strength sum which is calculated from the first interference amount information transmitted from each access point, and the channel determining unit determines a designated channel within the designated channels, which indicates the smallest average signal strength calculated from the second interference amount information, as a use channel of the selected access point.

In the channel decision system, the access point has': a beacon control unit which generates a beacon of the access point; a control unit which responds to an instruction from the management apparatus and controls an execution of the instruction; an interference amount measuring unit which measures each signal strength of beacons which is receivable for the access point among beacons of the plurality of access points in response to an instruction issued from the control unit, and notifies the measured signal strength of the received beacons to the control unit; a channel setting unit which sets the designated channel as a use channel in response to an instruction issued from the control unit; and a memory which stores a MAC address which is transmitted from the control unit and is used to identify a transmission source access point of a beacon, a total number of received beacons with respect to each of the MAC addresses, and a sum of signal strengths obtained by adding signal strengths of the received beacons with respect to each of the MAC addresses.

In the channel decision system, the plurality of access points communicate with the management apparatus via a wire network.

In the automatic channel decision system, the sum of average signal strengths as represented by the following equation (1) is employed in deciding the order. In the automatic channel decision method, the average signal strength represented by the following equation (2) is employed in deciding the channel.

The automatic channel decision system has the plurality of access points and the management apparatus such as a personal computer. The management apparatus firstly discovers the access point installed on the network. Then, the management apparatus orders the priority for the access point. The access point having a greater number of neighbor access points and the larger interference amount is given a higher order of priority by the management apparatus, and the use channel is decided for the access point in the descending order of priority.

According to the channel decision system, the channel is decided in a more favorable sequence than the distributed control method. Also, since no dedicated centralized management terminal is necessary, the channel decision method is implemented inexpensively. Also, the communication environments can be surveyed in more detail, employing the number of beacons and the signal strength, whereby the more efficient channel selection is enabled.

**Brief Description of the Drawings**

Fig. 1 is an arrangement view for explaining a typical channel decision example in a case where there are five access points;

Fig. 2 is an arrangement view for explaining another channel decision example in a case where there are five access points;

Fig. 3 is a block diagram for explaining an example for searching the access point in the invention;

Fig. 4 is a block diagram for explaining an example for ordering the priority for access point in the invention;

Fig. 5 is a block diagram for explaining an example for deciding the use channel for access point in the invention;

Fig. 6 is a block diagram for explaining another example for deciding the use channel for access point in the invention;

Fig. 7 is a block diagram showing an apparatus configuration example for practicing the invention;

Fig. 8 is a flow diagram for explaining an example for acquiring the IP address for access point in practicing the invention;

Fig. 9 is a flow diagram for explaining a case of making an initial channel selection at the time of installing the access point in the invention;

Fig. 10 is a flowchart for explaining an operation example of calculating a sum of average signal strengths for access points in the invention;

Fig. 11 is a flowchart for explaining an operation example of ordering the priority for access point in the invention;

Fig. 12 is a flow diagram for explaining an operation of channel decision for the access point having the highest order of priority in the invention;

Fig. 13 is a flowchart for explaining an operation example of calculating the average signal strength in the invention;

Fig. 14 is a flowchart for explaining an operation of deciding the use channel for the access point in the invention; and

Fig. 15 is a flow diagram for explaining an operation of channel decision for the access point having the K+1-th order of priority in the invention;

Fig. 16 is a block diagram for explaining an example of the automatic channel precision system in the access point according to the present invention;

Fig. 17 is a block diagram for explaining an example of the automatic channel precision control portion used in the system of Fig. 16; and

Fig. 18 is a block diagram for explaining an example of MAC control portion used in the system of Fig. 16.

**Detailed Description of the Preferred Embodiments**

<Searching Access Point>

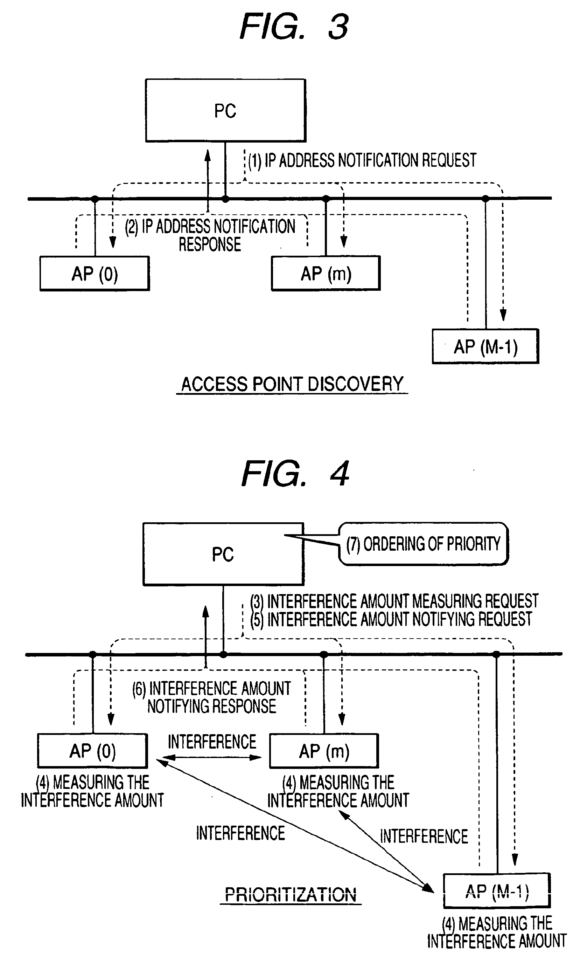

Since the management apparatus communicates with an access point, it is required to acquire an IP address of the access point. Thus, the management apparatus PC firstly transmits (1) an "IP address notification request" to the wired network, employing an IP broadcast, as shown in Fig. 3. Access point AP receiving this request notifies the IP address of the access point to the management apparatus PC with (2) an "IP address notification response".

<Ordering of priority>

After acquiring the IP address [(0), ..,(m), (M-1)] of the access point AP within the network, the management apparatus PC orders the priority of the access point to decide the sequence of deciding the channel for the access point AP. When M access points AP are detected, the management apparatus PC transmits (3) an "interference amount measurement request" to the detected access points AP(0), AP(1), .., AP(M-1), as shown in Fig. 4. The access point AP receiving the "interference amount measurement request" transmits a beacon, and simultaneously measures the number of beacons received from the neighbor access points AP and the signal strength.

After a certain time has passed, the management apparatus PC transmits (5) an "interference amount notification request" to the access point AP. The access point AP receiving the "interference amount notification request" stops (4) the "interference amount measurement" and beacon transmission, and transmits (6) an "interference amount notification response" including the interference amount information to the management apparatus PC. The management apparatus PC receiving the "interference amount notification response" acquires M pieces of interference amount information. Herein, the "interference amount information" indicates the number of beacons for each neighbor access point AP observed at the noticed access point AP and the total signal strength that is a sum of signal strengths of received beacons for each neighbor access point AP.

With this method, M average signal strength sums are calculated, employing M pieces of interference amount information acquired from M access points AP, and compared to decide the channel decision sequence (priority order). The average signal strength sum Pa (m) for the noticed access point AP(m) (m=0, 1, 2, .., M-1) is calculated in accordance with the following equation (1).

$$Pa(m) = \sum_{n=0}^{Na(m)-1} \{psa(m,n) / numa(m,n)\} \qquad ---(1)$$

Where Na(m) denotes the number of neighbor access points observed at the access point AP(m), psa(m,n) denotes the total beacon signal strength from the neighbor access point AP detected at the n-th time at the access point AP(m), and numa(m,n) denotes the number of beacons from the neighbor access point AP detected at the n-th time. Herein, an averaging operation function of signals in the equation (1) may be provided for each access point (AP), or for the management apparatus PC.

From the equation (1), when the signal strength per beacon or the number of neighbor access points is larger, the average signal strength sum Pa is larger.

With this method, among M access points AP, the access point AP having a larger average signal strength sum Pa is given a higher priority order, and the access point AP having a smaller average signal strength sum Pa is given a lower priority order. When the average signal strength sums at the access points AP are equal, the access point AP having a larger number of neighbor access points AP is given a higher priority order. Also, when the numbers of neighbor access points AP are equal, the access point AP having an earlier registration sequence in the management apparatus PC is given a higher priority order.

<Deciding the use channel for access point>

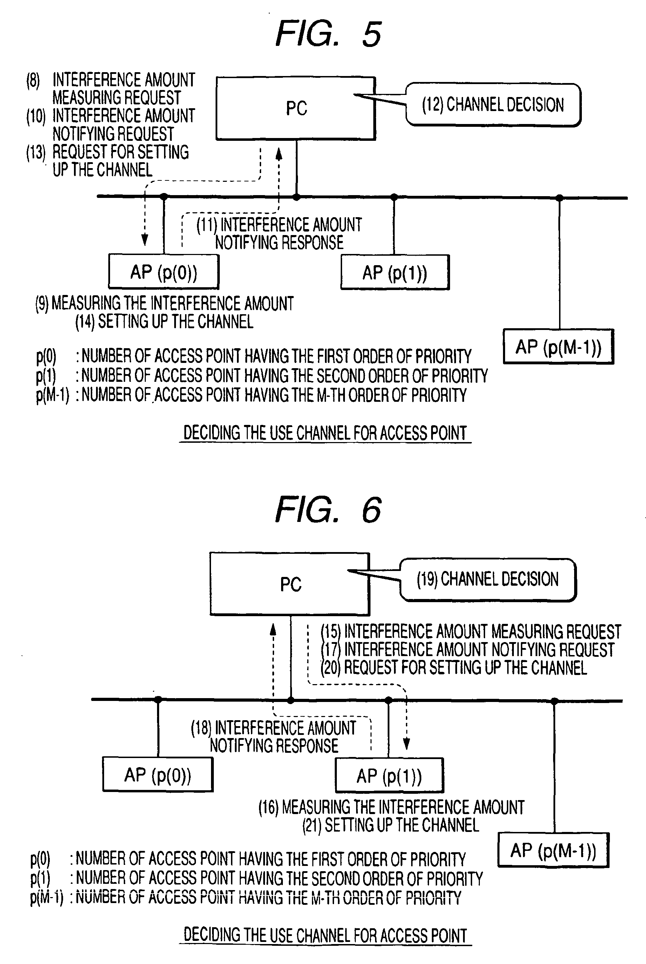

If the priority orders of M access points AP are decided, the use channel is decided in the sequence from the access point AP having higher priority order. When H channels are available at the access point AP, the channel number of each channel is denoted as C(0), C(1), .., C(H-1). The management apparatus PC firstly transmits (8) an "interference amount measurement request" to the access point AP having the highest priority order to acquire the interference amount in channel C(0), as shown in Fig. 5. The access point AP receiving the "interference amount measurement request" starts measuring the number of beacons from the neighbor access point AP and the signal strength in the designated channel.

After a certain time has passed, the management apparatus PC transmits (10) an "interference amount notification request" to the access point AP. The access point AP receiving the "interference amount notification request" stops measuring the interference amount, and transmits (11) an "interference amount notification response" including the "interference amount information" (number of beacons and total signal strength for each neighbor access point AP) to the management apparatus PC. The management apparatus PC makes (9) an "interference amount measurement" in all the channels C(0), C(1), .., C(H-1) desired to use. After the end of measuring the interference amount in all the channels, the management apparatus PC makes (12) a "channel decision".

With this method, the management apparatus PC calculates H average signal strengths based on H pieces of "interference amount information" acquired from H channels. Average signal strength Pc(h) in the noticed channel C(h) (h=0, 1, .., H-1) is calculated in accordance with the following equation (2).

$$Pc(h) = \left( \sum_{n=0}^{Nc(h)-1} psc(h,n) \right) / \left( \sum_{n=0}^{Nc(h)-1} numc(h,n) \right) \qquad ---(2)$$

Where Nc(h) denotes the number of neighbor access points observed in the channel C(h), psc(h,n) denotes a sum of beacon signal strengths from the neighbor access point AP detected at the n-th time in the channel C(h), and numc(h,n) denotes the number of beacons from the neighbor access point AP detected at the n-th time. From the equation (2), as the signal strength per beacon is larger, the average signal strength Pc has a larger value.

With this method, the use channel is decided as the channel having the smallest average signal strength among H average signal strengths. When the average signal strengths in multiple channels are equal, the channel having a smaller number of neighbor access points AP is selected. Also, when the numbers of neighbor access points AP are equal, the channel having a smaller channel number is selected.

If the use channel is decided (12), the management apparatus PC transmits (13) a "channel setting request" to the noticed access point AP, as shown in Fig. 5. The access point AP receiving (13) the "channel setting request" starts the operation as the access point AP, employing the designated channel.

If the channel for the access point AP having the highest priority order is decided, the channel for the access point AP having the next higher priority order is decided in the same way, whereby the use channels for all the access points AP are decided (15 to 21).

A scene for deciding the use channel for the access point AP takes place at the first time of installing the access point AP, or the time of adding the access point AP. In the following, an operation for deciding the channel at the first time of installing the access point AP, and at the time of adding the access point AP will be described below.

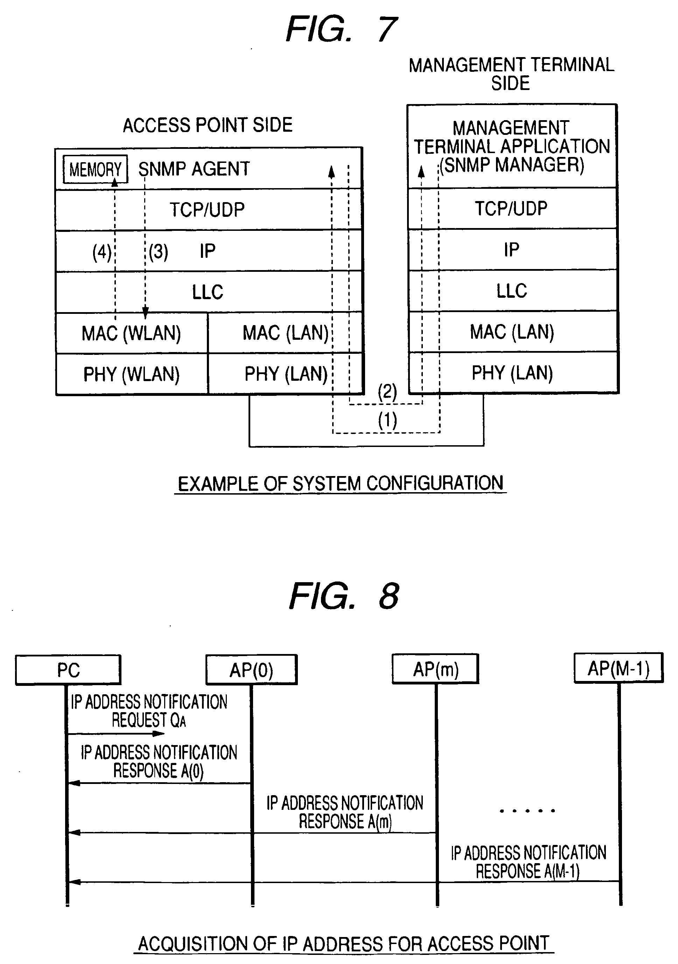

Fig. 7 is a configuration diagram of the access point AP and the management apparatus PC. The following table 1 is a message configuration example as used herein.

[Table 1]

| Message configuration example | |
|---|---|
| Message type | Message |
| (1) Request message | •     IP address notification request<br>•     Interference amount measurement request<br>•     Interference amount notification request<br>•     Channel setting request |
| (2) Response message | •     IP address notification response<br>•     Interference amount notification response |
| (3) Setting | •     Beacon transmission start/stop<br>•     Measurement start/stop |
| (4) Information | •     Interference amount information |

An SNMP (Simple Network Management Protocol) is used for communication between the management apparatus PC and the access point AP. It is supposed that the management apparatus PC is an SNMP manager, and the access point AP is an SNMP agent. The management apparatus PC transmits (1) a request message ("IP address notification request", "interference amount measurement request", "interference amount notification request", and "channel setting request") to the access point AP, employing the SNMP- The SNMP agent within the access point transmits <2> a response ("IP address notification response", and "interference amount notification response") to the management apparatus PC. Also, within the access point AP, the 3NMP agent issues <3> an instruction (channel setting, beacon transmission/stop) to the MAC (WLAN). Also, the SNMP agent acquires <4> the received beacon information from the MAC (WLAN), and stores the number of beacons received from the neighbor access point and the total signal strength in the memory.

The following table 2 lists a configuration example of the memory. The "MAC address", "number of received beacons at each MAC address", and "total signal strength of adding the signal strengths of received beacons at each MAC address" are stored in the memory.

[Table2]

| Memory configuration | | | |
|---|---|---|---|
| Memory number | MAC address | Number of received beacons | Total signal strength |
| 0 | mac (0) | num (0) | ps (0) |
| 1 | mac (1) | num (1) | ps (1) |
| : | : | : | : |
| n | mac (0) | num (n) | ps (n) |
| : | : | : | : |
| N-1 | mac (N-1) | num (N-1) | ps (N-1) |

<Channel selection at the first time of installing the AP>

A channel decision operation at the first time of introducing the access point will be described below. The management apparatus PC needs to acquire the IP address of the access point AP to communicate with the access point AP. Thus, the management apparatus PC transmits an "IP address notification request $Q_A$" onto the network, as shown in Fig. 8. The "IP address notification request. $Q_A$" is an "SNMP request" with the IP broadcast set up in the transmission destination. M access points AP(0), .., AP(m), ..AP(M-1) receiving this "SNMP request" store the IP addresses of their own in the transmission source, and transmit the IP address notification responses A(0), .., A(m), ., A (M-1) to the management apparatus PC. The management apparatus PC investigates the IP address of transmission source from this IP address notification response and acquires the IP address of the access point AP.

<Ordering of priority>

After acquiring the IP address of the access point AP within the network, the management apparatus PC orders the priority of the access point AP to decide a sequence of deciding the channel for the access point.
In the case where H channels are available at the access point, the channel number of each channel is denoted as C (0), C(1), .., C(H-1). The following table 3 lists a case where H is 4, and the channels 1, 6, 11 and 14 are employed.
[Table 3] Channel number example

| h | C (h) |
|---|---|
| 0 | 1 |
| 1 | 6 |
| 2 | 11 |
| 3 | 14 |

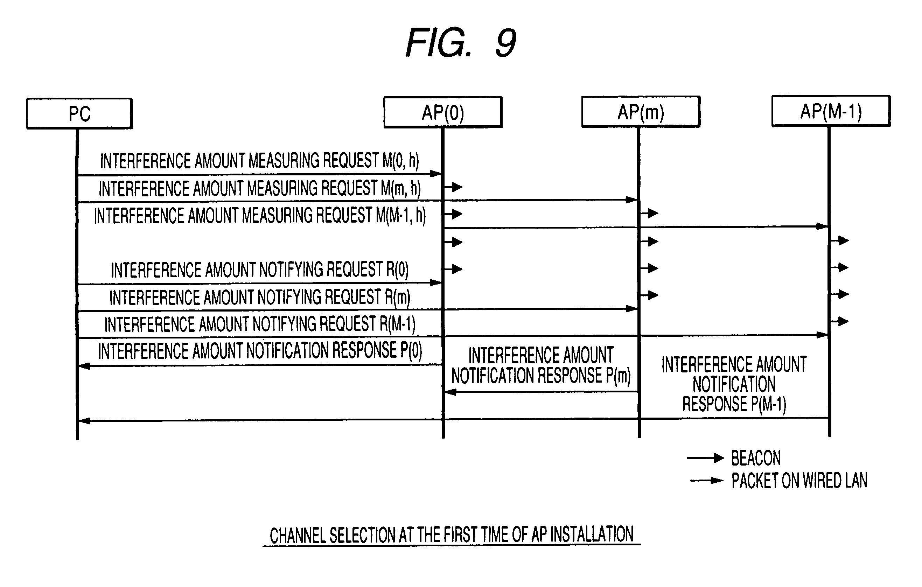

The management apparatus PC transmits the "interference amount measurement requests" M(0,h), M(1,h), .., M(M-1,h) to M detected access points AP(0), .., AP(m), .., AP(M-1) to instruct the interference amount measurement in channel C(h), as shown in Fig. 9. h is any number selected from 0, 1, .., and H-1.
The SNMP agent for the M access points AP(0), .., AP(m), .., AP(M-1) receiving the "interference amount measurement requests" sets the number of beacons for each access point and the total signal strength, which are stored in an internal memory, to zero. The following table 4 lists an information example within the memory of the access point AP(m).
[Table 4] Interference amount information from M access points

| | MAC address | Number of received beacons | Total beacon signal strength |
|---|---|---|---|
| Interference amount information within AP (0) | maca (0, 0) | numa (0, 0) | psa (0, 0) |
| | maca (0, 1) | numa (0, 1) | psa (0, 1) |
| | maca (0,2) | numa (0, 2) | psa (0, 2) |
| | : | : | : |
| | maca (0,Na(0)-1) | numa (0,Na(0)-1) | psa (0,Na(0)-1) |
| : | : | : | : |
| Interference amount information within AP(m) | maca (m, 0) | numa (m, 0) | psa (m, 0) |
| | maca (m, 1) | numa (m, 1) | psa (m, 1) |
| | maca (m, 2) | numa (m, 2) | psa (m, 2) |
| | : | : | : |
| | maca (m, Na (m)-1) | numa (m, Na (m)-1) | psa (m, Na (m)-1) |
| : | : | : | : |
| Interference amount information with AP (M-1) | maca (M-1, 0) | numa (M-1, 0) | psa (M-1, 0) |
| | maca (M-1, 1) | numa (M-1, 1) | psa (M-1, 1) |
| | maca (M-1, 2) | numa (M-1, 2) | psa (M-1, 2) |
| | : | : | : |
| | maca (M-1, Na (M-1)-1) | numa (M-1, Na (M-1)-1) | psa (M-1, Na (M-1)-1) |

Herein, Na(m) denotes the number of neighbor access points AP observed at the access point AP(m), maca (m,n) denotes the MAC address of the access point detected at the n-th time at the access point AP(m), numa(m,n) denotes the number of beacons from the access point AP detected at the n-th time at the access point AP(m), and psa (m,n) denotes a sum of beacon signal strengths from the access point AP detected at the n-th time at the access point AP(m).

Then, the SNMP agent for the access points AP(0), .., AP(m), .., AP(M-1) issues a "channel setting" instruction to the MAC (WLAN) to set the channel to C(h). Then, AP(1), .., AP(M-1) issues a "beacon transmission" instruction to the MAC (WLAN) to start the transmission of beacon. Finally, AP(1), .., AP(M-1) issues a "measurement start" instruction to the MAC (WLAN).

If the access point AP(m) receives the beacon from the neighbor access point AP(n) during the measurement of interference amount, the access point AP(m) increments by "1" the number of beacons numa(m,n) corresponding to the MAC address maca(m,n) in the memory, and at the same time adds the received signal strength to the corresponding total signal strength pas(m,n).

After a certain time has passed, the management apparatus PC transmits the "interference amount notification requests" R(0), .., R(m), .., R(M-1) to M access points AP(0), .., AP(m), .., AP(M-1). The access point receiving the "interference amount notification request" instructs an "interference amount measurement stop" and a "beacon transmission stop" to the MAC (WLAN). Then, the access point transmits the "interference amount notification response" P (0), .., P(m), .., P(M-1) including the interference amount information as listed in Table 4 to the management apparatus PC.

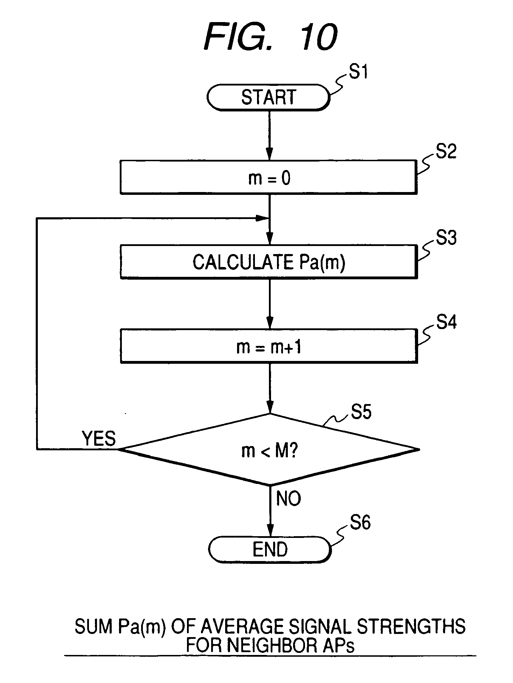

The management apparatus PC receiving the "interference amount notification responses" P(0), .., P(m), .., P (M-1)" calculates M "average signal strength sums" Pa(0), Pa(1), .., Pa(M-1), and orders the priority, employing Pa(0), Pa(1), .., Pa(M-1), as described below. The "average signal strength" Pa(m) of beacon at the access point AP(m) is calculated in accordance with the equation (1). Herein, numa(m,n) denotes the number of beacons from the access point detected at the n-th time at the access point m, and psa(m,n) denotes a sum of beacon signal strengths. Fig. 10 shows a flowchart for calculating the "average signal strength sums" Pa(0), Pa(1), .., Pa(M-1) at the M access points. That is, the operation is started (S1). Firstly, m is set to 0 (S2). Then, Pa(m)=Pa(0) is calculated in accordance with the equation (1) (S3). Then, m is incremented by 1 (S4). Then, a determination is made whether or not m is smaller than M (S5). If the test is yes, Pa(m)=Pa(1) is calculated. If the test (m<M) at S5 is no, the operation is ended.

The ordering of priority for M access points AP is made, employing M "average signal strength sums" Pa(0), Pa(1), .., Pa(M-1). The management apparatus PC gives the access point AP having larger average signal strength sum a higher priority. When the "average signal strength sums" for multiple access points AP are mutually equal, the access point AP having a larger number of neighbor access points AP is given a higher priority. When the numbers of neighbor access points AP are mutually equal, the access point having earlier registration sequence in the management apparatus PC is given a higher priority order. The priority order is represented as 0, 1, .., k, .., M-1, in which the highest priority order is 0. The access point having the k-th priority order is represented as Pri(k), which is decided in the following way.

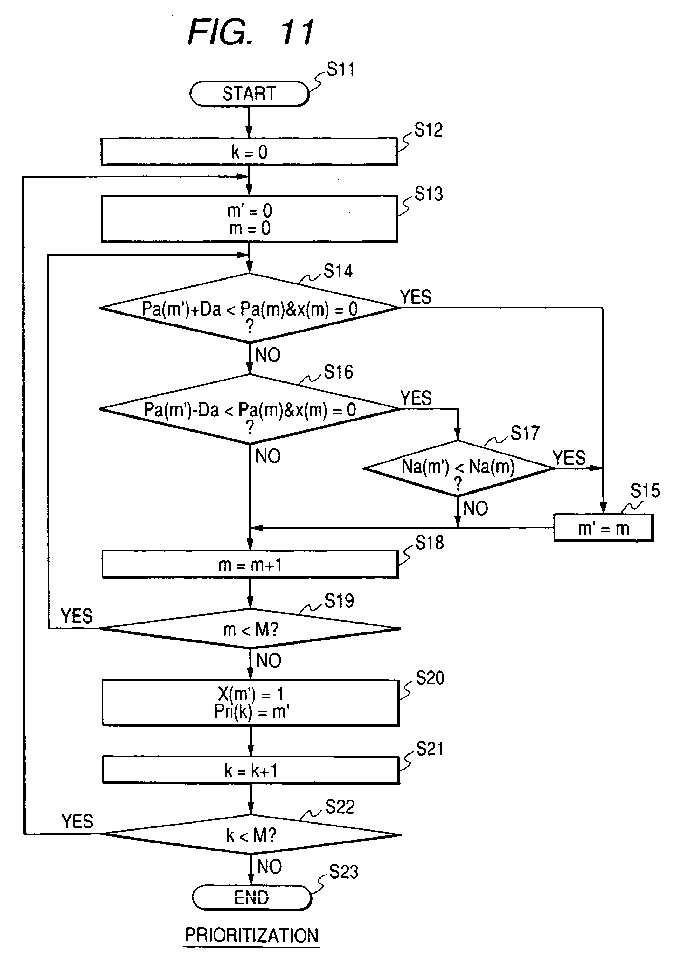

Fig. 11 is a flowchart of calculation. It is supposed that the candidate having the k-th priority order is the access point AP(m') (S11, S12, S13). Then, the average signal strength sum Pa(m') of the access point AP(m') and the average signal strength sum Pa(m) of the access point AP(m) arc compared, in which if Pa(m')+Da < Pa (m) and X(m)=0 (S14 = yes), m' is newly set to m (S15). Herein, X(m)=0 indicates that the priority order of the access point AP(m) is undecided. Otherwise, the "average signal strength sum" Pa(m') of the access point AP(m') and the "average signal strength sum" Pa(m) of the access point AP(m) are compared (S16). In this case, if Pa(m')-Da < Pa(m) and X(m)=0 (S16 = yes), the number of neighbor access points Na(m') and Na(m) are further compared (S17), in which if Na(m) is greater, m' is newly set to m (S15). Herein, Da is a numerical value for setting the range where two signal strengths are regarded equal. By increasing m as 0, 1, .., M-1 (S18, S19), the above operation is repeated. Finally, the access point having the k-th priority order is decided as Pri(k)=m'(S20). Also, to indicate that the priority order of the access point AP(m') is already decided, X(m') is set to 1 (S20). This operation is repeated by changing k as 0, 1, .., M-1 (S21, S22), whereby the priority orders for M access points are decided (S23).

<Deciding the use channel for access point AP>

If the priority order of access point AP is decided, the use channel is decided in sequence from the access point AP having the higher priority order. In the case where II channels are available at the access point AP, the interference amount is measured in the H channels. The following table 5 lists an example of interference amount information from the H channels.

[Table 5]

| Interference amount information from H channels | | | |
|---|---|---|---|
| | MAC address | Number of beacons | Total signal strength |
| Interference amount information of channel C(0) | macc (0, 0) | numc (0, 0) | psc (0, 0) |
| | macc (0, 1) | numc (0, 1) | psc (0, 1) |
| | macc (0, 2) | numc (0, 2) | psc (0, 2) |
| | : | : | : |
| | macc (0,Nc(0) - 1) | numc (0,Nc(0) - 1) | psc (0,Nc(0)-1) |
| : | : | : | : |
| Interference amount information of channel C(h) | macc (h, 0) | numc (h, 0) | psc (h, 0) |
| | macc (h, 1) | numc (h, 1) | psc (h, 1) |
| | macc (h, 2) | numc (h, 2) | psc (h, 2) |
| | . | . | . |
| | macc (h, Nc (h) - 1) | numc (h, Nc (h) - 1) | psc (h, Nc (h) -1) |
| : | : | : | : |
| Interference amount information of channel C (H-1) | macc (H-1, 0) | numc (H-1, 0) | psc (H-1, 0) |
| | macc (H-1, 1) | numc (H-1, 1) | psc (H-1, 1) |
| | macc (H-1, 2) | numc (H-1, 2) | psc (H-1, 2) |
| | : | : | : |
| | macc (H-1,Nc(H-1)-1) | numc(H-1,Nc(H-1)-1) | psc(H-1,Nc(H-1)-1) |

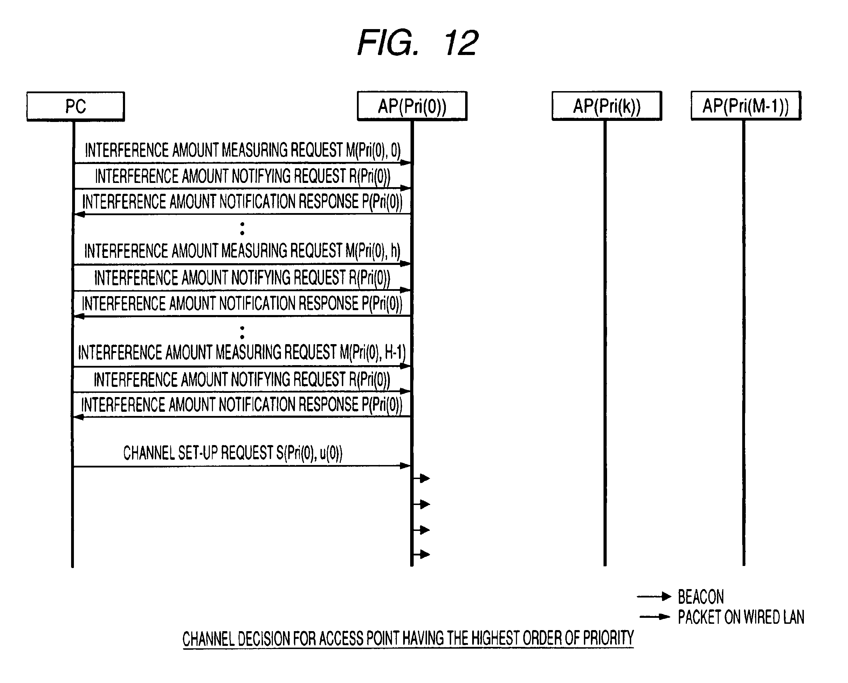

The management apparatus PC firstly transmits an "interference amount measurement request" M(Pri(0),0) to the access point AP(Pri(0)) having the highest priority order to acquire the interference amount in the channel C(0), as shown in Fig. 12. The access point AP(Pri(0)) receiving the "interference amount measurement request" sets the number of beacons and the total signal strength for each access point, which are stored in the memory within the access point AP, to zero. Then, the access point AP(Pri(0)) issues an instruction to the MAC (WLAN) to set the channel to C(0). Finally, AP(Pri(0)) issues a measurement start instruction to the MAC (WLAN). No beacon is transmitted.

If the access point AP(Pri(0)) receives the beacon from the neighbor access point AP(n) during the measurement of interference amount, AP(Pri(0)) increments by "1" the number of beacons $numc(0,n)$ corresponding to the MAC address $macc(0,n)$ in the memory (see the middle column in Table 5), and at the same time adds the signal strength of received beacon to the corresponding "total signal strength" $psc(0,n)$ (see the right column in Table 5). Herein, $Nc(h)$ denotes the number of neighbor access points observed in the channel C(h), $macc(h,n)$ denotes the MAC address of the access point detected at the n-th time in the channel C(h), $numc(h,n)$ denotes the number of beacons from the access point AP detected at the n-th time, which are measured in the C(h) during the measurement of interference amount, and $psc(m,n)$ denotes a sum of beacon signal strengths from the access point AP detected at the n-th time, which are measured in the channel C(h) during the measurement of interference amount.

After a certain time has passed, the management apparatus PC transmits an "interference amount notification request" R(Pri(0)) to the access point AP(Pri(0)). The access point Pri(0) receiving the interference amount notification request instructs an interference amount measurement stop to the MAC (WLAN). Then, it transmits an "interference amount notification response" P(Pri(0)) including the interference amount information as listed in Table 5 to the management apparatus PC. In the channels C(1), C(2), .., C(H-1), the interference amount is similarly measured.

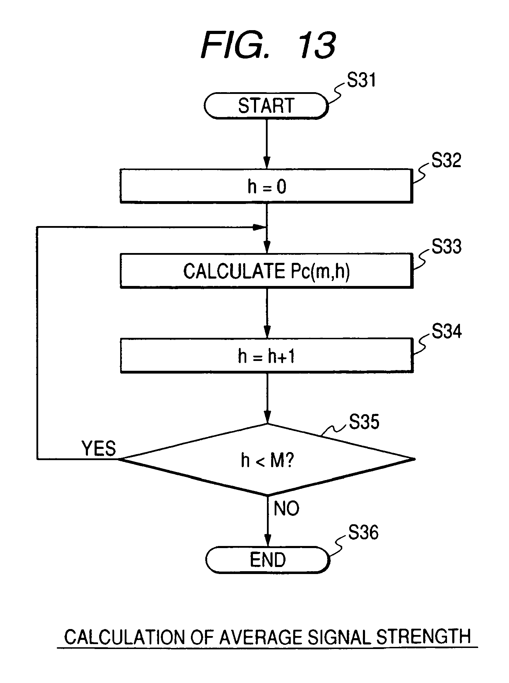

If the measurement of interference amount is ended for all the channels, the management apparatus PC decides the channel. The management apparatus PC calculates the average signal strength $Pc(h)$ of beacons from the neighbor access point detected in the channel C(h) in accordance with the equation (2), as shown in Fig. 13. With this method, the average signal strengths $Pc(0), Pc(1), .., Pc(H-1)$ in the H channels C(0), C(1), .., C(h), .., C(H-1) are calculated, in which the use channel is decided as the channel having the smallest average signal strength. When the average signal strengths of multiple channels are equal, the channel having a smaller number of neighbor access points is selected. Also, when the numbers of neighbor access points are equal as well, the channel having a smaller channel number is selected.

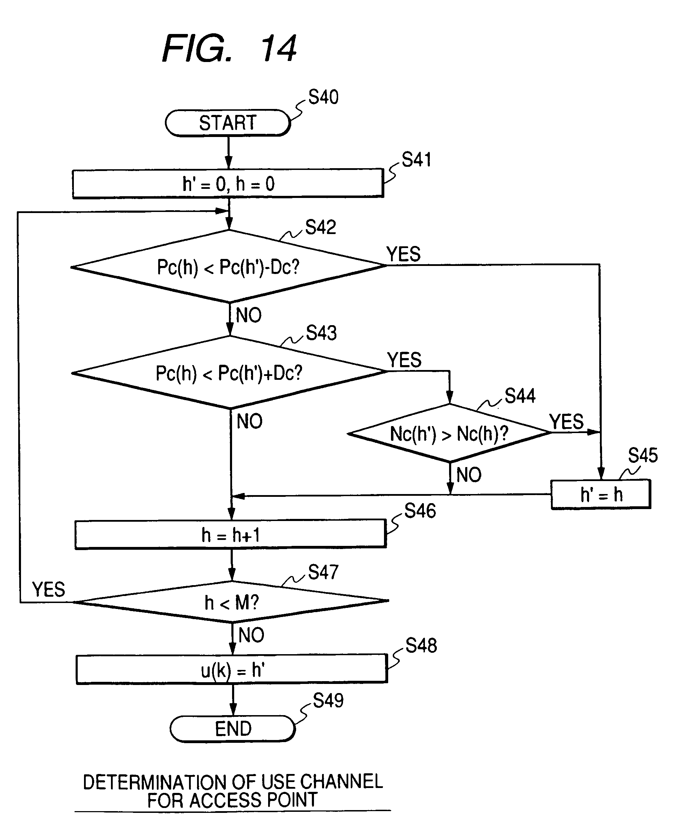

Fig. 14 is a flowchart of calculation. The calculation is started from h=0 (S40, S41). It is supposed that the candidate channel is h'. Then, the "average signal strength" $Pc(h')$ of channel h' and the "average signal strength" $Pc(h)$ of channel h are compared, in which if $Pc(h')-Dc > Pc(h)$ (S42 = yes), h' is newly set to h (S45). Otherwise (S42=no), the "average signal strength" $Pc(h')$ of channel h' and the "average signal strength" $Pc(h)$ of channel h are compared. In this case, if $Pc(h')+Dc > Pc(h)$ (S43 = yes), the number of neighbor access points $Nc(h')$ and $Nc(h)$ are further compared (S44), in which if $Nc(h)$ is smaller (S44 = yes), h' is newly set to h (S45). Herein, Dc is a numerical value for setting the range where two signal strengths are regarded equal. By increasing h as 0, 1, .., H-1 (S46, S47), the above operation is repeated. Finally, the use channel C(u(0)) is decided as C(h') (S42, S49).

If the channel C(u(0)) is decided, the management apparatus PC transmits a channel setting request S(Pri(0), u(0)) to the access point. The access point AP(Pri(0)) receiving the request issues an instruction for setting the channel of the MAC (WLAN) to C(u(0)). Also, it issues an instruction for transmitting the beacon and validating the function of access point.

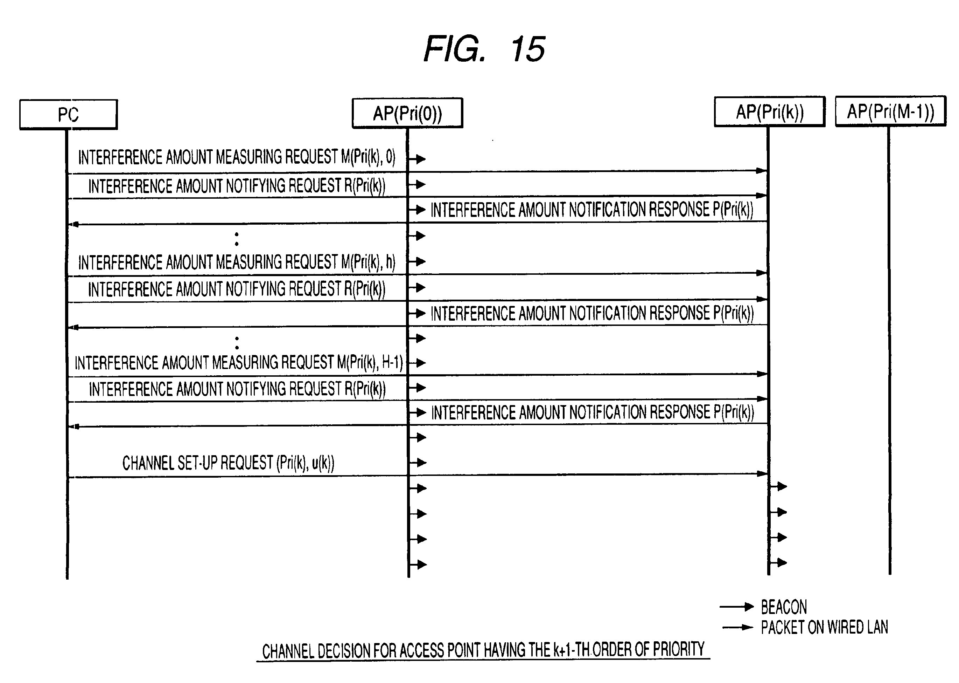

For the access points AP(Pri(k)) (k=1, 2, .., M-1) having lower priority order, the same operation is repeated as shown in Fig. 15, whereby the use channels C(u(k)) for all the access points AP(Pri(k)) are decided.

<Channel selection at the time of adding access point>

An example of adding M' access points AP(M), AP(M+1), .., AP(M+M'-1) is given below. The management apparatus PC firstly transmits an IP address notification request $Q_A$. The access points AP(0), .., AP(M-1), AP(M), AP(M+1), .., AP(M+M'-1) receiving the request notify the IP address of access point to the management apparatus PC with the IP address notification responses A(0), A(1), .., A(M-1), A(M), A(M+1), .., A(M+M'-1).

The management apparatus PC, which stores the access points AP that are notified previously, decides Lhe priority order for the access points AP(M), AP(M+1), .., AP(M+M'-1) that are notified for the first time by the already described method and decides the channels. The management apparatus PC may decide the priority order for all the access points AP(0), AP(1), .., AP(M-1), AP(M), AP(M+1), .., AP(M+M'-1) on the network again at the time of adding the access point, and perform the channel decision operation.

Next, explanation will be made to an automatic channel precision system in an access point according to the present invention.

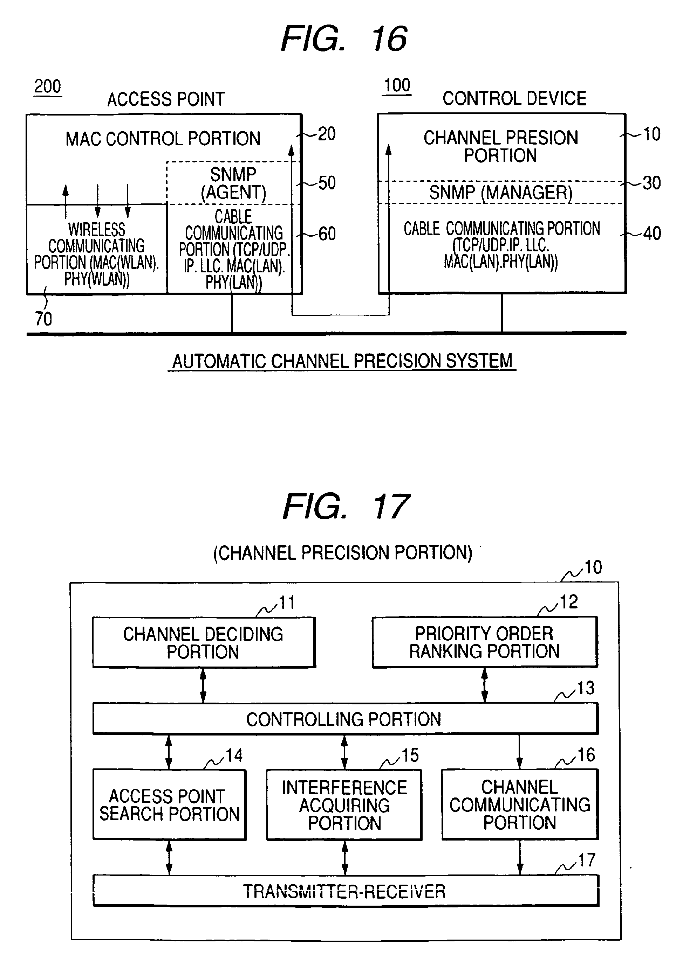

A setting example of the automatic channel precision system is shown in Fig. 16. The automatic channel precision system has a channel precision control portion 10 in a control device 100, a MAC control portion 20 in a cable communicating portion 40 and the access point 200, a cable communicating portion 60, and a wireless communicating portion 70. The channel precision control portion 10 performs decision of a channel used at the access point 200 on the basis of interference amount information obtained from the MAC control portion 20. The MAC control portion 20 follows indication from the channel precision control portion 10, measures the interference amount and changes a use channel. Communications between the channel precision control portion 10 and the MAC control portion 20 employ an SNMP (manager) 30 being the control system and an SNMP (agent) 50 being a network device. The wireless communicating portion 70 controls wireless communication based on the indication from MAC control portion 20.

A setting example of the channel precision system is shown in Fig. 17. The channel precision control portion 10 is composed of a controlling portion 13, an access point search portion 14, an interference amount acquiring portion 15, a priority order ranking portion 12, a channel deciding portion 11, a channel notifying portion 16, and a transmitter-receiver 17.

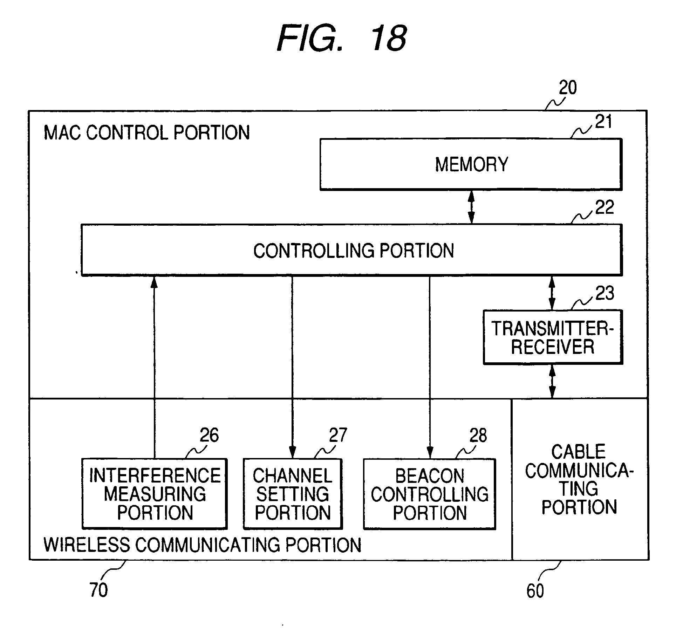

A setting example of the MAC control portion 20 is shown in Fig. 18. The MAC control portion 20 is composed of a controlling portion 22, a memory 21, and a transmitter-receiver 23. The wireless communicating portion 70 builds therein an interference amount measuring portion 26, a beacon control portion 28, and a channel setting portion 27. The controlling portion 22 may have the function of calculating the average signal strength.

A setting example of the memory 21 is shown in Table 2. The memory 21 accommodates therein "MAC address" for distinguishing a transmission access point 200 of the obtained beacon, "a number of the received beacons per each of MAC address" and "a sum of signal strength added with the signal strength of the received beacons per each of MAC address".

[Selection of channel when setting AP of first time]

[Search for access point]

Reference will be made to channel deciding actuation at introduction of the access point of first time. For communicating with the access point 200, the control device 100 should acquire an IP address of the access point 200. Therefore, at first time, the controlling portion 13 in the control device 100 indicates the access point search portion 14 to acquire the IP address of the access point 200 being present in a network.

The access point search portion 14 having received the indication broadcasts an IP address notification request message QA via the transmitter-receiver 17 to the network. The IP address notification request message QA reaches, as shown in Fig. 8, the access point (200) AP (0), ..., AP (m), AP (M-1) in the network.

When receiving the IP address notification request message QA via the transmitter-receiver 23, the controlling portion 22 of the access point (200) AP (m) transmits the IP address notification response message A(m) via the transmitter-receiver 23 for notifying the IP address of the present access point 200. The transmission IP address of the notification response message is set with the IP address of the access point (200) AP (m).

The access point search portion 14 of the channel precision control portion 10 in the control device 100 acquires all of the transmission IP address of the IP address notification response message A (0), ..., A(m), A(M-1) of all received via the transmitter-receiver 17 within a determined time, and notifies the acquired IP address to the controlling portion 13.

[Priority order ranking]

After acquiring the IP address of the access point 200 in the network, the controlling portion 13 of the channel precision control portion 10 in the control device 100 ranks the priority order for deciding the channel precision order of the access points (200) AP (0), ..., AP (m), AP (M-1). In case usable channels of the access point 200 are H pieces, channel signals of the respective channels are expressed with C(0), ..., C(1), C(H-1). Table 3 shows a case of using the channels of 1, 6, 11 and 14, for example, if H is 4.

The controlling portion 13 of the channel precision control portion 10 in the control device 100 notifies the collected IP addresses to the interference amount,acquiring portion 15 in order to acquire the interference amount to be received by the access point 200.

The interference amount acquiring portion 15 notified with the IP address transmits an interference amount measurement request message M(O, h), ..., M(m, h), M(M-1, h)via the transmitter-receiver 17 to all of the notified IP addresses in order to acquire the interference amount at the channel C(h). h selects any of 0, 1, ..., H-1. The interference amount measurement request message reaches, as shown in Fig. 9, the access point (200) AP (0), ..., AP (m), AP (M-1).

When receiving the interference amount measurement request message M(m, h) via the transmitter-receiver 23, the controlling portion 22 of the MAC control portion 20 in the access point (200) AP(m) decides the sum of the beacon number and the signal strength per the access point accommodated in an internal memory 21 to be 0 (zero). Table 4 shows the examples of information stored in the memory 21 of the access point (200) AP (m). Herein, Na (m) is the number of peripheral access points measured at the access point (200) AP(m). maca (m, n) is a MAC address of the access point 200 detected in an order of n at the access point (200) AP(m). numa (m, n) is the number of beacon from the access point 200 detected in the order of n at the access point (200)AP(m). psa (m, n) is the sum of the signal strength of the beacon from the access point 200 detected in the order of n at the access point (200)AP(m).

Next, the controlling portion 22 of the MAC control portion 20 in the access point (200)AP(m) issues a channel changing indication to the channel setting portion 27 for setting the channel at C(h). Subsequently, the controlling portion 22 issues a transmitting indication to the beacon controlling portion 28 so as to start transmission of the beacon. Last, the controlling portion 22 issues a measurement starting indication to the interference amount measuring portion 26. The wireless communicating portion 70 having received the indication changes the channel to C (h), starts transmission of the beacon, and measures the interference amount.

When the access point (200)AP(m) receives the beacon from the peripheral the access point (200)AP(n) during measuring the interference amount, the interference amount measuring portion 26 of the wireless communicating portion 70 in the access point (200) AP(m) notifies a measured result to the controlling portion 22. The controlling portion 22 increases by 1 numa (m, n) of the beacon amount corresponding to the MAC address maca (m, n) in the memory 21, and at the same time, adds the signal strength of the received beacon to the sum psa (m, n) of the corresponding signal strength.

After a fixed time passes, the interference amount acquiring portion 15 of the channel precision control portion 10 in the control device 100 transmits the interference amount notification request message R (0), ..., R(m), ..., R(M-1) via the transmitter-receiver 17 to all of the notified IP addresses in order to acquire the measured results of the interference amount. As shown in Fig. 9, the interference amount notification request message reaches the access point (200) AP (0), ..., AP (m), AP (M-1).

The controlling portion 22 of the MAC control.portion 20 in the access point (200) AP (0), ..., AP (m), AP (M-1) having received the interference amount notification request indicates the beacon controlling portion 28 to stop transmission of the beacon, and the interference amount measuring portion 26 to stop measurement of the interference amount. The indicated wireless communicating portion 70 stops transmission of the beacon and measurement of the interference amount. Next, the controlling portion 22 of the MAC control portion 20 in the access point (200) AP (0), ..., AP (m), AP (M-1) transmits, to the control device 100 via the transmitter-receiver 23, the interference amount notification response message P(0), ..., P(m), ..., P(M-1) including the interference amount information shown in Table 4. The interference amount notification response message P (0), ..., P(m), ..., P(M-1) reaches the control device 100 as shown in Fig. 9.

When receiving the interference amount notification response P (0), ..., P(m), ..., P(M-1) via the transmitter-receiver 17, the interference amount acquiring portion 15 of the channel precision control portion 10 in the control device 100 notifies the interference amount to the controlling portion 13. The controlling portion 13 notifies the interference amount to the priority order ranking portion 12 so as to determine the priority order.

The priority order ranking portion 12 having been notified of the interference amount calculates as under shown the sum Pa(0), Pa(1), ..., Pa(M-1) of the average signal strength of M pieces and ranks the priority order by use of Pa(0), Pa (1), ..., Pa(M-1) The sum Pa (m) or the average strength of the beacon of the access point (200) AP (m) is calculated by the formula (1). Herein, numa (m, n) is the beacon number from the access point 200 detected in the order of n at the access point (200) AP (m), and psa (m, n) shows the sum of the signal strength of the beacon. Fig. 10 shows the calculation flow of the sum Pa (0), Pa (1), ..., Pa(M-1) of the average signal strength of the access point 200 of M pieces.

The priority order ranking portion 12 carries out ranking of the priority order of the access points 200 of M pieces by use of the sum Pa(0), Pa(1), ..., Pa(M-1) of the average signal strength of M pieces. The channel precision control portion 10 heightens the priority degree of the access point 200 being large in the sum of the average signal strength. But, in case the sums of the average signal strength of a plurality of access points 200 are equal, the priority order of the access point 200 having a more number of the peripheral access point 200 is heightened. Further, in case the numbers of the peripheral access points 200 are also equal, the priority order of the access point 200 having an earlier registration number in the channel precision control portion 10 is heightened. The priority orders are expressed with 0, 1, ..., k, ..., M-1, and 0 is a top priority. The access point 200 having the priority of a k order, is shown with Pri(k), Pri(k) is decided as under.

The calculation flow is shown in Fig. 11. A candidate of the priority order being No. k is made the access point (200) AP (m'), and the sum Pa(m') of the average signal strength of (S11 to S13) and the access point(200)AP(m') is compared (S14) with the sum Pa(m) of the average signal strength of the access point(200)AP(m), and if being Pa(m') + Da < Pa(m) and X(m) = 0, it is (yes), and new m' = m is made (S15). Herein, X (m) = 0 shows that the priority order of the access point (200) AP (m') is not yet decided. In other case, the sum Pa(m') of the average signal strength of the access point (200) AP(m') is compared (S16) with the sum Pa(m) of the average signal strength of the access point (200)AP(m), and if being Pa(m') - Da < Pa (m) and X(m) = 0, it is (yes), and further, the numbers Na(m') and Na(m) of the peripheral access points are compared (S17), and if Na(m) is larger, it is (yes), and new m' = m is made. Da is a numerical value for determining a range regarding two signal strength as equal. The above mentioned operations are carried out (S18), (S19) increasing m as 0, 1, ..., M-1, and finally decides (S20) as the access point(200)AP(Pri(k) = m') of the priority order being No. k. X (m') = 1 is made (S20) for showing that the priority order of the access point (200) AP (m') has already been decided. The operations are carried out (S21), (S22) changing as k = 0, 1, ..., M-1, and the priority order of the access point 200 of M pieces is decided.

[Decision of the use channel of the access point]

When the priority order of the access point 200 is ranked, decision of the use channel is performed in order of the access point 200 having the higher priority order. In case the channels usable to the access point 200 are H pieces, the interference amount is measured in the channels of H pieces.
For at first again acquiring the interference amount of the access point(200)AP(Pri(0)) having the highest priority order, the controlling portion 13 of the channel precision control portion 10 in the control device notifies Pri(0) to the interference amount acquiring portion.
The notified interference amount acquiring portion 15 transmits the interference measurement request message M(Pri (0), 0) to the access point (200) AP(Pri(0)) via the transmitter- receiver 17 in order to acquire the interference amount in the channel C(0). The transmitted interference amount measurement request message reaches, as shown in Fig. 12, the access point AP(200)(Pri(0)).
The controlling portion 22 of the MAC control portion 20 in the access point (200) AP (Pri (0)) having received the interference amount measurement request message M (Pri (0), 0) decides the sum of the beacon number and the signal strength per the access point (200) accommodated in an internal memory 21 to be 0 (zero), and issues an indication for changing the channel to C(0)to the channel setting portion 27. Subsequently, the controlling portion 22 issues the indication of starting measurement to the interference amount measuring portion 26. The indicated wireless communicating portion 70 changes the channel to C(0), and starts measurement of the interference amount. The beacon is not transmitted.
When the access point (200) AP (Pri(0)) receives the beacon from the peripheral the access point (200)AP(n) during measuring the interference amount, the interference amount measuring portion 26 notifies a measuring result to the controlling portion 22, and the controlling portion 22 increases by 1 numa (h, n) of the amount of the beacon corresponding to the MAC address macc (h, n) in the memory 21, and at the same time, adds the signal strength of the received beacon to the sum psa (h, n) of the corresponding signal strength. Herein, Nc (h) is the number of the peripheral access point 200 measured in the channel (h), macc (h, n) is MAC address of the access point 200 detected in the order of n in C(h). numc (h, n) is the sum of the signal strength of the beacon from the access point 200 measured during measuring the interference amount in C(h) and detected in the order of n.
After the fixed time passes, the interference amount acquiring portion 15 of the channel precision control portion 10 in the control device 100 transmits the interference amount notification request message R (Pri(0)) via the transmitter-receiver for acquiring the measured result of the interference amount. The interference amount notification request message R(Pri(0)') reaches the access point (200) AP (Pri(0)) as shown in Fig. 12.
The controlling portion 22 of the MAC control portion 20 in the access point(200)AP(Pri(0)) having received the interference amount notification request message R(Pri(0)) indicates the interference amount measuring portion 26 in the wireless communicating portion 70 to stop measurement. The indicated wireless communicating portion 70 stops measurement. Next, the controlling portion 22 transmits, to the control device 100 via the transmitter-receiver 23, the interference amount notification response message P(Pri(0)) including the interference amount information shown in Table 5. The interference amount notification response message P (Pri(0)) reaches the control device 100 as shown in Fig. 12.
The interference amount acquiring portion 15 of the channel precision control portion 10 in the control device 100 acquires the interference amount similarly also in the channels C (1), C (2), ..., C(H-1). Finishing measurement of the interference amount in all the channels, the interference amount acquiring portion 15 notifies the interference amount to the controlling portion 13.
The notified controlling portion 13 informs the interference amount to the channel deciding portion 11. The informed channel deciding portion 11 decides the use channel. The channel deciding portion 11 calculates, as the formula (2), the average signal strength Pc (h) of the beacon from the peripheral access point 200 detected in the channel C (h).
The present formula calculates the average signal strength Pc(0), Pc(1), ..., Pc(h), ..., C(H-1) in the channels of H pieces C(0), C(1), ..., C (h), ..., Pc(H-1), and the channel being smallest in the average signal strength is made the use channel. But, in case of being equal in the average signal strength of a plurality of channels, the channels having a smaller number of the peripheral access point 200 are selected. Further, in case the numbers of Lhe peripheral access points 200 are also equal, the channels having smaller channel number are selected.
The calculation flow is shown in Fig. 14. A candidate channel is made h', and the average signal strength Pc (h') of the channel h' and the average signal strength Pc (h) of the average signal strength are compared, and if being Pc (h') - Dc > Pc (h) (S42), new h' = h is made (S45). In other case, the average signal strength Pc(h') of the channel h' is compared (S43) with the average signal strength Pc(h) of the channel h, and if being Pc(h') + Dc > Pc(h), it is (yes), and further, the numbers Nc(h') and Nc(h) of the peripheral access points are compared (S44), and if Nc(h) is smaller, it is (yes), and new h' = h is made. Dc is a numerical value for determining a range regarding two signal strength as equal. The above mentioned operations are carried out (S46), (S47) increasing h as 0, 1, ..., H-1, and finally decide the use channels C(u(0)) as C(h'). Deciding channels C (u (0)), the channel deciding portion 11 notifies the channel to the controlling portion 13.

The notified controlling portion 13 informs the use channel to the channel notifying portion 16. The informed channel notifying portion 16 transmits the channel setting request message S(Pri(0), u(0)) via the transmitter-receiver 17 in order to notify the use channels to the access point (200)AP(Pri(0)). The channel setting request message S (Pri (0), u (0)) reaches the access point (200) AP (Pri (0)) as shown in Fig. 12.

The controlling portion 22 of the MAC control portion 20 in the access point (200) AP (Pri(0)) having received the request indicates the channel setting portion 27 in the wireless communicating portion 70 to use C(u(0)), and further indicates transmission of the beacon and availability of function of the access point. The indicated wireless communicating portion 70 changes the channel or transmits the beacon, and starts actuation as the access point 200. Also in regard to the access point (200) AP (Pri (k)) k = 1, 2, ..., M-1, the similar operation is performed to decide the use channels C(u (k)) of all the access point (200) AP (Pri(k))

[Selection of channels when adding the access point]

An example of adding the access points of M pieces (200) AP (M), AP (M + 1) ..., AP (M + M' - 1) is shown. The channel precision control portion 10 at first transmits the IP address notification request QA. The access point having received this request (200)AP (U), ..., AP(M-1), AP(M), AP(M + 1) ..., AP(M + M' - 1) notifies the channel precision control portion 10 IP address of the self-access point 200 from IP address notification response A(0), A(1), ..., A(M-1), A(M), A (M + 1) ..., A(M + M' - 1).
The channel precision control portion 10 has stored the previously notified access point 200, decides the priority order by the already stated method to firstly notified AP(M), AP(M + 1) ..., AP(M + M' - 1), and decides the channel. When adding the access point 200, the channel precision control portion 10 may again decides the priority order and carries out the channel deciding actuation, including the access points (200) of all on the network AP (0), AP(1), ..., AP(M-1), ..., AP(M), AP (M + 1) ..., AP(M + M' - 1).

The present invention automatically performs the decision of the use channel efficiently, which is essential in constructing the wireless LAN network.

**Claims**

1. A channel decision system for access points comprising a plurality of access points outputting a beacon and a management apparatus communicating with the plurality of the access points in a wireless LAN system, **characterized in that** the management apparatus (100,10) comprises:

     an access point discovering unit (14) adapted to transmit a request to the plurality of access points for the access points to identify themselves, whereby to discover the plurality of access points;
     an interference amount acquiring unit (15) which transmits a first interference amount measuring request and a second interference amount measuring request to each of the access points, and acquires a first interference amount information and a second interference amount information transmitted from each access point, wherein the first and second interference amount measuring requests make a request to each access point to measure interference amounts;
     a priority order determining unit (12) which determines priority given to each access point based upon the sum of average signal strengths, calculated based on the first interference amount information, transmitted by each access point; and
     a channel determining unit (11) which sets a designated channel based on an average signal strength, calculated based on the second interference amount information, for each available channel with respect to each access point selected in accordance with the priority, and determines the designated channel as a use channel of the selected access point to transmit a channel setting request to the selected access point, and **in that** the access points (200, 20) comprise:

     an interference amount measuring unit (26) which measures each signal strength of receivable beacons among beacons transmitted from other access points, in response to said first interference amount measuring request, to acquire said first interference amount, and which measures each signal strength of the receivable beacons among beacons transmitted from the other access points when said second interference amount measuring request is received, with respect to each of available designated channels, to acquire said second interference amount.

2. The channel decision system according to claim 1, wherein the management apparatus (100) comprises a first average signal strength calculating unit which calculates the average signal strength sum based on the first interference amount information transmitted from each access point, and calculates the average signal strength of each channel based on the second interference amount information.

3. The channel decision system according to claim 1, wherein the access point (200) comprises a second average signal strength calculating unit which calculates the average signal strength sum based on the first interference amount information, and calculates the average signal strength of each channel based on the second interference amount information.

4. The channel decision system according to claim 2 or claim 3, the priority order determining unit (12) determines the priority given to each access point in increasing order of the average signal strength sum which is calculated from the first interference amount information transmitted from each access point, and the channel determining unit (11) determines a designated channel within the designated channels, which indicates the smallest average signal strength calculated from the second interference amount information, as a use channel of the selected access point.

5. The channel decision system according to any one of claims 1 to 4, wherein the access point (200,20) comprises:

a beacon control unit (28) which generates a beacon of the access point;
a control unit (22) which responds to an instruction from the management apparatus and controls an execution of the instructions;
an interference amount measuring unit (26) which measures each signal strength of beacons which is receivable for the access point among beacons of the plurality of access points in response to an instruction issued from the control unit, and notifies the measured signal strength of the received beacons to the control unit;
a channel setting unit (17) which sets the designated channel as a use channel in response to an instruction issued from the control unit; and
a memory (21) which stores a MAC address which is transmitted from the control unit and is used to identify a transmission source access point of a beacon, a total number of received beacons with respect to each of the MAC addresses, and a sum of signal strengths obtained by adding signal strengths of the received beacons with respect to each of the MAC addresses.

6. The channel decision system according to any one of claims 1 to 5, wherein the plurality of access points communicate with the management apparatus via a wire network.

**Patentansprüche**

1. Ein Kanalentscheidungssystem für Zugangspunkte, umfassend eine Vielzahl von Zugangspunkten, die einen Leitstrahl ausgeben, und eine Verwaltungsvorrichtung, die mit der Vielzahl der Zugangspunkte in einem drahtlosen LAN-System kommuniziert, **dadurch gekennzeichnet, dass** die Verwaltungsvorrichtung (100, 10) umfasst:

eine Zugangspunktentdeckungseinheit (14), ausgebildet zum Übertragen einer Anforderung an die Vielzahl der Zugangspunkte, so dass sich die Zugangspunkte selbst identifizieren können, wobei die Vielzahl der Zugangspunkte entdeckt wird;
eine Interferenzmengen-Erlangungseinheit (15), die eine erste Interferenzmengenmessanforderung und eine zweite Interferenzmengenmessanforderung überträgt an jeden der Zugangspunkte, und eine erste Interferenzmengeninformation und eine zweite Interferenzmengeninformation erlangt, die übertragen werden von jedem Zugangspunkt, wobei die erste und zweite Interferenzmengenmessanforderung eine Anforderung durchführen an jeden Zugangspunkt, Interferenzmengen zu messen;
eine Prioritätsreihenfolgebestimmungseinheit (12), die eine Priorität bestimmt, die jedem Zugangspunkt gegeben ist, basierend auf der Summe der durchschnittlichen Signalstärken, die berechnet werden, basierend auf der ersten Interferenzmengeninformation, die übertragen wird durch jeden Zugangspunkt; und
eine Kanalbestimmungseinheit (11), die einen designierten Kanal setzt bzw. einrichtet, basierend auf einer durchschnittlichen Signalstärke, die berechnet wird, basierend auf der zweiten Interferenzmengeninformation, für jeden verfügbaren Kanal mit Bezug auf jeden Zugangspunkt, ausgewählt gemäß der Priorität, und den designierten Kanal bestimmt, als ein Verwendungskanal des ausgewählten Zugangspunkts, zum Übertragen einer Kanalsetzanforderung an den ausgewählten Zugangspunkt, und **dadurch**, dass
die Zugangspunkte (200, 20) umfassen:

eine Interferenzmengenmesseinheit (26), die jede Signalstärke von empfangbaren Leitstrahlen von den Leitstrahlen misst, die übertragen werden von den anderen Zugangspunkten, in Ansprechen auf die erste Interferenzmengenmessanforderung, um die erste Interferenzmenge zu erlangen, und die jede Signalstärke von den empfangbaren Leitstrahlen von den Leitstrahlen misst, die von den anderen Zugangspunkten übertragen werden, wenn die zweite Interferenzmengenmessanforderung empfangen wird, mit Bezug auf jeden der verfügbaren designierten Kanäle, um die zweite Interferenzmenge zu erlangen.

2. Das Kanalentscheidungssystem nach Anspruch 1, wobei die Verwaltungsvorrichtung (100) eine erste Durchschnittssignalstärken-Berechnungseinheit umfasst, die die Durchschnittssignalstärkensumme berechnet, basierend auf der ersten Interferenzmengeninformation, die übertragen wird von jedem Zugangspunkt, und die durchschnittliche Signalstärke von jedem Kanal berechnet, basierend auf der zweiten Interferenzmengeninformation.

3. Das Kanalentscheidungssystem nach Anspruch 1, wobei der Zugangspunkt (200) eine zweite Durchschnittssignalstärken-Berechnungseinheit umfasst, die die Durchschnittssignalstärkensumme berechnet, basierend auf der ersten Interferenzmengeninformation, und die durchschnittliche Signalstärke von jedem Kanal berechnet, basierend auf der zweiten Interferenzmengeninformation.

4. Das Kanalentscheidungssystem nach Anspruch 2 oder Anspruch 3, wobei
die Prioritätsreihenfolgebestimmungseinheit (12) die Priorität bestimmt, die gegeben ist für jeden Zugangspunkt in ansteigender Reihenfolge der Durchschnittssignalstärkensumme, die berechnet wird von der ersten Interferenzmengeninformation, die übertragen wird von jedem Zugangspunkt, und
die Kanalbestimmungseinheit (11) einen designierten Kanal innerhalb der designierten Kanäle bestimmt, der die kleinste durchschnittliche Signalstärke zeigt, die berechnet wird von der zweiten Interferenzmengeninformation, als ein Verwendungskanal des ausgewählten Zugangspunkts.

5. Das Kanalentscheidungssystem nach einem der Ansprüche 1 bis 4,
wobei der Zugangspunkt (200, 20) umfasst:

eine Leitstrahlsteuereinheit (28), die einen Leitstrahl des Zugangspunkts erzeugt;
eine Steuereinheit (22), die auf eine Weisung von der Verwaltungsvorrichtung antwortet und eine Ausführung der Weisungen steuert;
eine Interferenzmengenmesseinheit (26), die jede Signalstärke von Leitstrahlen misst, die empfangbar ist für den Zugangspunkt, unter Leitstrahlen der Vielzahl der Zugangspunkte, in Ansprechen auf eine Weisung, die ausgegeben wird von der Steuereinheit, und die gemessene Signalstärke der empfangenen Leitstrahlen der Steuereinheit mitteilt;
eine Kanalsetzeinrichtung (17), die den designierten Kanal setzt bzw. einrichtet, als einen Verwendungskanal, in Ansprechen auf eine Weisung, die ausgegeben wird von der Steuereinheit; und
einen Speicher (21), der eine MAC-Adresse speichert, die übertragen wird von der Steuereinheit und verwendet wird zum Identifizieren eines Übertragungsquellenzugangspunkts eines Leitstrahls, sowie eine Gesamtzahl der Leitstrahlen mit Bezug auf jede der MAC-Adressen und eine Summe von Signalstärken, die erhalten werden durch Addieren von Signalstärken der empfangenen Leitstrahlen mit Bezug auf jede der MAC-Adressen.

6. Das Kanalentscheidungssystem nach einem der Ansprüche 1 bis 5,
wobei die Vielzahl der Zugangspunkte mit der Verwaltungsvorrichtung über ein Drahtnetzwerk kommuniziert.

**Revendications**

1. Système de sélection de canal pour points d'accès comprenant une pluralité de points d'accès sortant une balise et un appareil de gestion communiquant avec la pluralité des points d'accès dans un système de réseau local (LAN) sans fil,

**caractérisé en ce que** l'appareil de gestion (100, 10) comprend:

une unité de découverte de point d'accès (14) conçue pour transmettre une demande à la pluralité de points d'accès pour que les points d'accès s'identifient, de façon à découvrir la pluralité de points d'accès ;

une unité d'acquisition de quantité d'interférence (15) qui transmet une première demande de mesure de quantité d'interférence et une seconde demande de mesure de quantité d'interférence à chacun des points d'accès, et qui acquiert une première information de quantité d'interférence et une seconde information de quantité d'interférence transmises à partir de chaque point d'accès, dans lesquelles les première et seconde demandes de mesure de quantité d'interférence effectuent une demande à chaque point d'accès pour mesurer des quantités d'interférence ;

une unité de détermination d'ordre de priorité (12) qui détermine une priorité donnée à chaque point d'accès sur la base de la somme d'intensités moyennes de signal, calculées sur la base de la première information de quantité d'interférence, transmise par chaque point d'accès ; et

une unité de détermination de canal (11) qui paramètre un canal désigné sur la base d'une intensité moyenne de signal, calculée sur la base de la seconde information de quantité d'interférence, pour chaque canal disponible en ce qui concerne chaque point d'accès sélectionné selon la priorité, et qui détermine le canal désigné comme un canal d'utilisation du point d'accès sélectionné pour transmettre une demande de paramétrage de canal au point d'accès sélectionné, et **en ce que**

les points d'accès (200, 20) comprennent :

une unité de mesure de quantité d'interférence (26) qui mesure chaque intensité de signal de balises recevables parmi les balises transmises en provenance d'autres points d'accès, en réponse à ladite première demande de mesure de quantité d'interférence, pour acquérir ladite première quantité d'interférence, et qui mesure chaque intensité de signal des balises recevables parmi les balises transmises en provenance des autres points d'accès quand ladite seconde demande de mesure de quantité d'interférence est reçue, en ce qui concerne chacun des canaux désignés disponibles, pour acquérir ladite seconde quantité d'interférence.

2. Système de sélection de canal selon la revendication 1,
dans lequel l'appareil de gestion (100) comprend une première unité de calcul d'intensité moyenne de signal qui calcule la somme d'intensité moyenne de signal sur la base de la première information de quantité d'interférence transmise en provenance de chaque point d'accès, et qui calcule l'intensité moyenne de signal de chaque canal sur la base de la seconde information de quantité d'interférence.

3. Système de sélection de canal selon la revendication 1,
dans lequel le point d'accès (200) comprend une seconde unité de calcul d'intensité moyenne de signal qui calcule la somme d'intensité moyenne de signal sur la base de la première information de quantité d'interférence, et qui calcule l'intensité moyenne de signal de chaque canal sur la base de la seconde information de quantité d'interférence.

4. Système de sélection de canal selon la revendication 2 ou la revendication 3, dans lequel
l'unité de détermination d'ordre de priorité (12) détermine la priorité donnée à chaque point d'accès dans l'ordre croissant de la somme d'intensité moyenne de signal qui est calculée à partir de la première information de quantité d'interférence transmise en provenance de chaque point d'accès, et
l'unité de détermination de canal (11) détermine un canal désigné dans les canaux désignés, qui indique l'intensité moyenne de signal la plus petite calculée à partir de la seconde information de quantité d'interférence, comme un canal d'utilisation du point d'accès sélectionné.

5. Système de sélection de canal selon l'une quelconque des revendications 1 à 4,
dans lequel le point d'accès (200, 20) comprend :

une unité de commande de balise (28) qui produit une balise du point d'accès ;

une unité de commande (22) qui répond à une instruction provenant de l'appareil de gestion et qui commande une exécution des instructions ;

une unité de mesure de quantité d'interférence (26) qui mesure chaque intensité de signal de balises qui est recevable pour le point d'accès parmi les balises de la pluralité de points d'accès en réponse à une instruction délivrée en provenance de l'unité de commande, et qui avertit l'unité de commande de l'intensité de signal mesurée des balises reçues ;

une unité de paramétrage de canal (17) qui paramètre le canal désigné comme un canal d'utilisation en réponse à une instruction délivrée en provenance de l'unité de commande ; et

une mémoire (21) qui stocke une adresse MAC qui est transmise en provenance de l'unité de commande et qui est utilisée pour identifier un point d'accès de source de transmission d'une balise, un nombre total de balises reçues en ce qui concerne chacune des adresses MAC, et une somme d'intensités de signal obtenues en ajoutant les intensités de signal des balises reçues en ce qui concerne chacune des adresses MAC.

6. Système de sélection de canal selon l'une quelconque des revendications 1 à 5, dans lequel la pluralité de points d'accès communique avec l'appareil de gestion par l'intermédiaire d'un réseau câblé.

## FIG. 1

| | |
|---|---|
| [A] 2 | [B] 3 |
| | |
| [E] 1 | |
| | |
| [C] 4 | [D] 2 |

(A)~(E): ACCESS POINTS

1~4: USE CHANNELS

SEQUENCE: (E)→(A)→(B)→(C)→(D)

OPTIMAL EXAMPLE OF CHANNEL ASSIGNMENT

## FIG. 2

| | |
|---|---|
| [A] 1 | [B] 2 |
| | |
| [E] 1 | |
| | |
| [C] 3 | [D] 4 |

(A)~(E): ACCESS POINTS

1~4: USE CHANNEL

SEQUENCE: (A)→(B)→(C)→(D)→(E)

LESS OPTIMAL EXAMPLE OF CHANNEL ARRANGEMENT

## FIG. 3

PC

(1) IP ADDRESS NOTIFICATION REQUEST

(2) IP ADDRESS NOTIFICATION
RESPONSE

AP (0)

AP (m)

AP (M-1)

ACCESS POINT DISCOVERY

## FIG. 4

PC

(7) ORDERING OF PRIORITY

(3) INTERFERENCE AMOUNT MEASURING REQUEST
(5) INTERFERENCE AMOUNT NOTIFYING REQUEST

(6) INTERFERENCE AMOUNT
NOTIFYING RESPONSE

AP (0)          INTERFERENCE          AP (m)

(4) MEASURING THE
INTERFERENCE AMOUNT

(4) MEASURING THE
INTERFERENCE AMOUNT

INTERFERENCE

INTERFERENCE

PRIORITIZATION

AP (M-1)

(4) MEASURING THE
INTERFERENCE AMOUNT

# FIG. 5

(8) INTERFERENCE AMOUNT
   MEASURING REQUEST
(10) INTERFERENCE AMOUNT
   NOTIFYING REQUEST
(13) REQUEST FOR SETTING
   UP THE CHANNEL

PC

(12) CHANNEL DECISION

(11) INTERFERENCE AMOUNT
   NOTIFYING RESPONSE

AP (p(0))

AP (p(1))

AP (p(M-1))

(9) MEASURING THE INTERFERENCE AMOUNT
   (14) SETTING UP THE CHANNEL

p(0)    : NUMBER OF ACCESS POINT HAVING THE FIRST ORDER OF PRIORITY
p(1)    : NUMBER OF ACCESS POINT HAVING THE SECOND ORDER OF PRIORITY
p(M-1) : NUMBER OF ACCESS POINT HAVING THE M-TH ORDER OF PRIORITY

DECIDING THE USE CHANNEL FOR ACCESS POINT

# FIG. 6

PC

(19) CHANNEL DECISION

(15) INTERFERENCE AMOUNT MEASURING REQUEST
(17) INTERFERENCE AMOUNT NOTIFYING REQUEST
(20) REQUEST FOR SETTING UP THE CHANNEL

(18) INTERFERENCE AMOUNT
   NOTIFYING RESPONSE

AP (p(0))

AP (p(1))

(16) MEASURING THE INTERFERENCE AMOUNT
   (21) SETTING UP THE CHANNEL

AP (p(M-1))

p(0)    : NUMBER OF ACCESS POINT HAVING THE FIRST ORDER OF PRIORITY
p(1)    : NUMBER OF ACCESS POINT HAVING THE SECOND ORDER OF PRIORITY
p(M-1) : NUMBER OF ACCESS POINT HAVING THE M-TH ORDER OF PRIORITY

DECIDING THE USE CHANNEL FOR ACCESS POINT

## FIG. 7

MANAGEMENT TERMINAL SIDE

ACCESS POINT SIDE

| MEMORY | SNMP AGENT |
| TCP/UDP |
| (4) (3) IP |
| LLC |
| MAC (WLAN) | MAC (LAN) |
| PHY (WLAN) | PHY (LAN) |

| MANAGEMENT TERMINAL APPLICATION (SNMP MANAGER) |
| TCP/UDP |
| IP |
| LLC |
| MAC (LAN) |
| PHY (LAN) |

(2)

(1)

EXAMPLE OF SYSTEM CONFIGURATION

## FIG. 8

| PC | AP(0) | AP(m) | AP(M-1) |

IP ADDRESS NOTIFICATION REQUEST Qₐ

IP ADDRESS NOTIFICATION RESPONSE A(0)

IP ADDRESS NOTIFICATION RESPONSE A(m)

. . . . .

IP ADDRESS NOTIFICATION RESPONSE A(M-1)

ACQUISITION OF IP ADDRESS FOR ACCESS POINT

## FIG. 9

CHANNEL SELECTION AT THE FIRST TIME OF AP INSTALLATION

# FIG. 10

```
        ( START )  ⌐S1

           │
           ▼
   ┌─────────────────┐  ⌐S2
   │      m = 0      │
   └─────────────────┘

           │
           ▼  ◄──────────┐
   ┌─────────────────┐  ⌐S3
   │  CALCULATE Pa(m) │
   └─────────────────┘  │

           │            │
           ▼            │
   ┌─────────────────┐  ⌐S4
   │     m = m+1     │  │
   └─────────────────┘  │

           │            │
           ▼            │
         ◇ S5          │
  YES   ╱    ╲          │
 ◄──────  m < M?  ──────┘
        ╲    ╱
          ◇
          │ NO
          ▼
      ( END )  ⌐S6
```

SUM Pa(m) OF AVERAGE SIGNAL STRENGTHS
FOR NEIGHBOR APs

# FIG. 11

```
                    ┌S11
              ( START )

                    │
              ┌─────────────┐ ┌S12
              │    k = 0     │
              └─────────────┘
                    │
              ┌─────────────┐ ┌S13
              │   m' = 0     │
              │   m = 0      │
              └─────────────┘
                    │
                   S14
              ╱─────────────╲          YES
             ╱ Pa(m')+Da <   ╲─────────────────┐
             ╲ Pa(m)&x(m) = 0 ╱                 │
              ╲      ?       ╱                  │
                   │NO                          │
                   S16                          │
              ╱─────────────╲    YES            │
             ╱ Pa(m')-Da <   ╲────────┐         │
             ╲ Pa(m)&x(m) = 0 ╱       │         │
              ╲      ?       ╱        │         │
                   │NO          S17   │         │
                   │      ╱─────────╲  YES      │
                   │     ╱ Na(m') <  ╲──────────┤
                   │     ╲ Na(m) ?   ╱          │
                   │      ╲─────────╱           │
                   │         │NO          ┌S15  │
                   │         │       ┌─────────┐│
                   │         │       │ m' = m  │◄┘
                   │◄────────┴───────└─────────┘
                   │
              ┌─────────────┐ ┌S18
              │   m = m+1    │
              └─────────────┘
                   │
                   S19
         YES  ╱─────────────╲
        ┌─────╲   m < M?    ╱
        │      ╲───────────╱
        │          │NO
        │     ┌─────────────┐ ┌S20
        │     │  X(m') = 1   │
        │     │  Pri(k) = m' │
        │     └─────────────┘
        │          │
        │     ┌─────────────┐ ┌S21
        │     │   k = k+1    │
        │     └─────────────┘
        │          │
        │          S22
   YES  │     ╱─────────────╲
   ┌────┴─────╲   k < M?    ╱
   │           ╲───────────╱
   │               │NO    ┌S23
   │           ( END )
   └───►(to S13)
```

PRIORITIZATION

## FIG. 12

| PC | AP(Pri(0)) | AP(Pri(k)) | AP(Pri(M-1)) |

INTERFERENCE AMOUNT MEASURING REQUEST M(Pri(0), 0)

INTERFERENCE AMOUNT NOTIFYING REQUEST R(Pri(0))

INTERFERENCE AMOUNT NOTIFICATION RESPONSE P(Pri(0))

INTERFERENCE AMOUNT MEASURING REQUEST M(Pri(0), h)

INTERFERENCE AMOUNT NOTIFYING REQUEST R(Pri(0))

INTERFERENCE AMOUNT NOTIFICATION RESPONSE P(Pri(0))

INTERFERENCE AMOUNT MEASURING REQUEST M(Pri(0), H-1)

INTERFERENCE AMOUNT NOTIFYING REQUEST R(Pri(0))

INTERFERENCE AMOUNT NOTIFICATION RESPONSE P(Pri(0))

CHANNEL SET-UP REQUEST S(Pri(0), u(0))

→ BEACON

→ PACKET ON WIRED LAN

CHANNEL DECISION FOR ACCESS POINT HAVING THE HIGHEST ORDER OF PRIORITY

# FIG. 13

S31

START

S32

h = 0

S33

CALCULATE Pc(m,h)

S34

h = h+1

S35

YES    h < M?

NO

S36

END

CALCULATION OF AVERAGE SIGNAL STRENGTH

# FIG. 14

START ⟶ S40

h' = 0, h = 0 ⟶ S41

Pc(h) < Pc(h')-Dc? ⟶ S42

NO

Pc(h) < Pc(h')+Dc? ⟶ S43

YES

NO

Nc(h') > Nc(h)? ⟶ S44

YES

NO

h' = h ⟶ S45

h = h+1 ⟶ S46

h < M? ⟶ S47

YES

NO

u(k) = h' ⟶ S48

END ⟶ S49

DETERMINATION OF USE CHANNEL
FOR ACCESS POINT

## FIG. 15

| PC | AP(Pri(0)) | AP(Pri(k)) | AP(Pri(M-1)) |

INTERFERENCE AMOUNT MEASURING REQUEST M(Pri(k), 0)

INTERFERENCE AMOUNT NOTIFYING REQUEST R(Pri(k))

INTERFERENCE AMOUNT NOTIFICATION RESPONSE P(Pri(k))

INTERFERENCE AMOUNT MEASURING REQUEST M(Pri(k), h)

INTERFERENCE AMOUNT NOTIFYING REQUEST R(Pri(k))

INTERFERENCE AMOUNT NOTIFICATION RESPONSE P(Pri(k))

INTERFERENCE AMOUNT MEASURING REQUEST M(Pri(k), H-1)

INTERFERENCE AMOUNT NOTIFYING REQUEST R(Pri(k))

INTERFERENCE AMOUNT NOTIFICATION RESPONSE P(Pri(k))

CHANNEL SET-UP REQUEST (Pri(k), u(k))

→ BEACON
→ PACKET ON WIRED LAN

CHANNEL DECISION FOR ACCESS POINT HAVING THE k+1-TH ORDER OF PRIORITY

# FIG. 16

<u>200</u>    ACCESS POINT        <u>100</u>    CONTROL DEVICE

| MAC CONTROL PORTION | ~20 |
| CHANNEL PRESION PORTION | ~10 |

SNMP (AGENT) ~50

WIRELESS COMMUNICATING PORTION (MAC(WLAN). PHY(WLAN))

CABLE COMMUNICATING PORTION (TCP/UDP. IP. LLC. MAC(LAN). PHY(LAN)) ~60

70

SNMP (MANAGER) ~30

CABLE COMMUNICATING PORTION (TCP/UDP.IP. LLC. MAC(LAN).PHY(LAN)) ~40

## AUTOMATIC CHANNEL PRECISION SYSTEM

# FIG. 17

## (CHANNEL PRECISION PORTION)

~10

~11 CHANNEL DECIDING PORTION

~12 PRIORITY ORDER RANKING PORTION

~13 CONTROLLING PORTION

~14 ACCESS POINT SEARCH PORTION

~15 INTERFERENCE ACQUIRING PORTION

~16 CHANNEL COMMUNICATING PORTION

~17 TRANSMITTER-RECEIVER

# FIG. 18

MAC CONTROL PORTION  20

MEMORY  21

CONTROLLING PORTION  22

TRANSMITTER-RECEIVER  23

INTERFERENCE MEASURING PORTION  26

CHANNEL SETTING PORTION  27

BEACON CONTROLLING PORTION  28

CABLE COMMUNICA-TING PORTION

WIRELESS COMMUNICATING PORTION  70

60

**EP 1 617 600 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2003283506 A

- US 5933420 A